# EUROPÄISCHE PATENTSCHRIFT

(11) **EP 0 404 861 B1**
(45) Veröffentlichungstag und Bekanntmachung des Hinweises auf die Patenterteilung: **01.06.1994**
(21) Anmeldenummer: 89908377.8
(22) Anmeldetag: 19.07.1989
(51) Int. Cl.: A01M 7/00

(54) **VORRICHTUNG ZUM BEHANDELN VON PFLANZENKULTUREN, MIT WENIGSTENS EINEM UNTER ABSTAND VOM ERDBODEN LOTRECHT ÜBER DER PFLANZENKULTUR BEWEGBAR ANGEORDNETEN EINRICHTUNGSTRÄGER**
DEVICE FOR TREATING CROPS WITH AT LEAST ONE VERTICALLY MOBILE SUPPORT ABOVE THE CROPS AND THE GROUND
DISPOSITIF DE TRAITEMENT DE CULTURES AGRICOLES AVEC AU MOINS UN SUPPORT PERPENDICULAIREMENT MOBILE AU-DESSUS DES CULTURES ET DU SOL

(30) Priorität: 11.08.1988 DE 3827273
(43) Veröffentlichungstag der Anmeldung: 02.01.1991
(73) Patentinhaber: ASSFALG, Alois, D-89597 Unterwachingen (DE)
(72) Erfinder: ASSFALG, Alois, D-89597 Unterwachingen (DE)
(74) Vertreter: Braito, Herbert
(86) Internationale Anmeldenummer: DE8900479
(87) Internationale Veröffentlichungsnummer: WO9001265

(56) Entgegenhaltungen:
- EP-A- 77 270
- EP-A- 157 592
- DE-U- 8 801 727
- GB-A- 2 025 665
- US-A- 3 425 197
- US-A- 4 197 694

## Beschreibung

Die Erfindung bezieht sich auf eine Vorrichtung zum Behandeln von Pflanzenkulturen, mit wenigstens einem unter Abstand vom Erdboden lotrecht über der Pflanzenkultur bewegbar angeordneten Einrichtungsträger
Bei vergleichbaren Vorrichtungen hat man zunächst mit rein mechanischen Tastern und durch diese Taster mittels Kraftverstärkung gesteuerten Servo-Einrichtungen gearbeitet, die vornehmlich hydraulisch gestaltet waren. Später hat man elektrische, elektronische, optische und akkustische Meßfühler eingesetzt, um auf diese Weise ertastete Werte steuern zu können. Durchgesetzt haben sich zum Teil Echoloteinrichtungen.

Diese bekannten Geräte hatten jedoch verschiedene Nachteile. Sie waren einmal verhältnismäßig kompliziert und dadurch störanfällig, zum andern fehlte es oft an der gebotenen Meßgenauigkeit. Vor allem aber waren die Ergebnisse von der Witterung abhängig, insbesondere von dem Feuchtigkeitsgehalt der Luft. So können Meßergebnisse bei Regen, Nebel, Schneefall nicht ohne weiteres mit solchen aus trockener Luft verglichen werden.

Diese Differenzen erklären sich dadurch, daß sich auf der Pflanzenoberseite kleine Tröpfchen absetzen, die eine von der Luft zum Teil erheblich abweichendes Brechungsverhalten zeigen und daher berührungsfrei geführte Taststrahlen ablenken.

Nun ist aber für den Erfolg der Behandlungs- und Pflegevorgänge an den Pflanzenkulturen der Abstand der Behandlungsvorrichtung von der Oberseite der Pflanzenkultur von erheblicher Bedeutung. Ist der Abstand zu groß, so ist die Wirkung der Behandlung zu gering. Ist er zu klein, werden die Pflanzen durch Überkonzentration geschädigt.

Um konstante Abstände zu ermöglichen, sind schon verschiedene Vorschläge gemacht und unterschiedliche Tastvorrichtungen und Steuereinrichtungen entwickelt worden. So läßt sich nach der US-A-4 197 614 ein Mähwerk selbsttätig an einer gemähten Kante des Erntegutes entlangführen und das Gut danach auf großer Fläche in gleicher Höhe schneiden.

Zum anderen wird nach der DE-B-3 536 774 im Zuge eines vorhergehenden Abreinigungsvorganges eine Flüssigkeitsspur gelegt, an der sich ein Rasenmäher mittels auf die Grenze der Flüssigkeitsspur ansprechender Tastmittel entlang führt.

Durch die US-A-3 425 197 ist auch ein Rasenmäher bekannt, der wiederum den Rasenbestand über einer bestimmten Höhe abtastet, wobei der Taststrom durch die Pflanzen hindurch in das Erdreich geführt wird und nach Verstärkung den Rasenmäher entlang der Kante eines ungeschnittenen Rasenbereiches steuert. Dort kann zwar auch der Abstand zur Bodenfläche durch den Rasenbestand hindurch abgetastet werden, aber dabei wird eine größere Tastkraft aufgebracht, was besondere Anforderungen an das Elektrodenmaterial stellt und nicht bei allen Pflanzenkulturen anwendbar ist.

Bei Pflege und Behandlung von Pflanzen nach der eingangs gegebenen Definition muß die Behandlung zwar mit einem bestimmten vorgegebenen Abstand von den Behandlungsorganen erfolgen, die Höhe der Pflanzenkulturen über dem tragfesten Boden, der selbst uneben ist, wechselt dagegen ständig. Zudem kann vor der Behandlung kein Abgleich der Höhe erfolgen. Es muß daher die Höhe der Behandlungseinrichtung über der nur schwach definierten oberen Hüllfläche dem notwendigen Behandlungsabstand angepaßt werden.

Es sind zwar noch mancherlei andere Vorrichtungen zum Einregeln eines vorgegebenen Abstandes und auch zum Steuern irgendwelcher Vorgänge in Abhängigkeit von einem ertasteten Abstand bekannt. So läßt sich nach der US-PS 41 97 694 ein Mähwerk an einer gemähten Kante des Erntegutes entlangführen und das Gut dadurch auf großer Fläche in gleicher Höhe schneiden. Zum andern wird nach DE-B 35 36 974 innerhalb eines außen begrenzten Feldes durch eine Flüssigkeitsspur geführt, die beim vorhergehenden Abreinigungsvorgang angelegt worden ist.

Durch die US-A 34 25 197 ist auch ein Rasenmäher bekannt geworden, der wiederum den Rasenbestand über einer bestimmten Höhe abtastet, indem der Taststrom durch die Pflanzen hindurch in das Erdreich geführt wird und nach Verstärkung den Rasenmäher entlang der Kante eines ungeschnittenen Rasenbereiches steuert. Dort kann allerdings auch der Abstand zur Bodenfläche durch den Rasenbestand hindurch abgetastet werden, aber dabei wird eine größere Tastkraft aufgebracht, was besondere Anforderungen an das Elektrodenmaterial stellt und nicht bei allen Pflanzenkulturen anwendbar ist.

In der Regel genügt es, einen Stromkreiszweig von einer unversiegbaren Spannungsquelle zur Bodenmasse zu errichten, wie es für viele Vorgänge ohnehin bei landwirtschaftlichen Maschinen und anderen auf dem Feld fahrbaren Geräten der Fall ist, wo verschiedene Kontaktstellen des Fahrzeugkorpus, meist eines Traktors, über die Reifen an Masse angeschlossen oder sonstwie geerdet werden. Bevorzugt wird jedoch das Schließen eines solchen Bodenstromkreises durch die Bodenmasse über getrennte Erdungselekroden oder -kontakte.

Dabei ist die hauptsächlich einzusetzende Stromart der aus der Fahrzeugbatterie entnommene Gleichstrom, wobei möglichst der Minuspol an Masse gelegt werden sollte. Es kann aber auch mit Wechselstrom, einzelnen Spannungsimpulsen oder mit modulierten Spannungen bestimmter Kurvenform und Frequenz gearbeitet werden.

Im Prinzip ist es möglich, eine brauchbare Steuerung mit einem einzigen Tastkontakt oder Sensor durchzuführen, wobei der Steuerwert um eine mittlere Größe pendelt und eine Glättung der Kurve durch Dämpfung erreicht wird.

Es hat sich jedoch gezeigt, daß in Zwischen- und Grenzwerten größere Meßabweichungen auftreten. Diese Erscheinung läßt sich durch bei Nebel oder Regen auf der Pflanzenoberfläche gebildete Tropfen erklären, die berührungsfrei geführte Abtaststrahlen diffus ablenken, was bei Berührungskontakten entfällt.

Die Erfindung betrifft eine Vorrichtung zum Behandeln von Pflanzenkulturen, mit wenigstens einem unter Abstand vom Erdboden lotrecht über der Pflanzenkultur bewegbar angeordneten Einrichtungsträger, der eine oder mehrere Behandlungseinrichtungen mit einem oder mehreren Behandlungsorgangen so waagerecht und lotrecht bewegbar hält, daß sie mit vorgegebenem Abstand über die Pflanzenkulturen hinweggeführt werden, mit einer Mehrzahl Tastvorrichtungen zum selbständigen Ertasten des Abstandes der Behandlungseinrichtung, der Behandlungsorgane oder deren Träger von der oberen Hüllfläche der zu behandelnden Plfanzenkultur, mit einer durch die Tastvorrichtungen beeinflußbaren Steuereinrichtung und wenigstens einer durch die Steuereinrichtung steuerbaren Stellvorrichtung zur selbststätigen Höheneinstellung der Behandlungseinrichtung bzw. deren Träger oder Zwischenträger.

Eine Vorrichtung dieser Art ist bekannt durch die GB-A-2 025 665.

Aufgabe der Erfindung ist es, eine neue Behandlungs- und Tastvorrichtung zu schaffen, die den geschilderten Unregelmäßigkeiten nicht oder nur in geringerem Ausmaß unterliegt.

Zur Lösung dieser Aufgabe sind erfindungsgemäß zwecks Ermittlung von Zwischen- oder Grenztastwerten innerhalb eines gemeinsamen Tastbereiches gemäß der US-A-3425197 zwei oder mehr für den elektrischen Kontakt mit der Pflanzenkultur ausgebildete Tastkontakte in Richtung des Tastwertgefälles zueinander versetzt angeordnet und die Tastkontakte durch ein Drahtseil aufgehängt und über ein isoliertes Kabel an den Pluspol einer Stromquelle angeschlossen.

Ihr Träger kann dann stufenweise mit kleinen Schritten nachgestellt werden, wobei durch den unmittelbaren Kontakt mit den Pflanzen der Einfluß von Witterungserscheinungen auf die Tast- oder Meßwerte gemindert und die Steuerungsgenauigkeit verbessert wird.

Nach einer bevorzugten Ausführungsform der Erfindung werden quer zur Bewegungsrichtung des Einrichtungsträgers über dem Erdboden in einer oder mehreren Reihen Tasteinrichtungen angeordnet und in beliebiger bzw. der Arbeits- oder Tastbreite angepaßter Anzahl mit einzelnen Tastkontakten und/oder Gruppen von Tastkontakten zum Leiten von Niederspannungsstrom durch die Pflanzen im Erdreich versehen.

Die Tastorgane können für den unmittelbaren elektrischen Kontakt mit der Pflanzenkultur große Kontaktflächen aus elektrisch gut leitendem Metall aufweisen und nun zur Errichtung eines Niederspannungs-Erdstromkreises oder -stromkreiszweiges durch wenigstens eine Pflanze hindurch in das Erdreich dienen.

Dabei hat sich einmal die pendelnde Aufhängung solcher Tastkontakte bewährt. Wenigstens ein Tastkontakt kann auch durch mindestens ein gedrehtes oder geflochtenes Drahtseil aufgehängt oder gebildet und über ein isoliertes Kabel an eine Stromquelle angeschlossen sein.

Ferner läßt sich zweckmäßigerweise das metallische Drahtseil des Tastkontaktes wenigstens zu einem Ende hin für verstärkte Rückstellkräfte gegen eine seitliche Auslenkung einrichten. Dabei wird die Ausbildung des Drahtseiles als mit einer dicken Gummischicht umhülltes isoliertes Kabel bevorzugt, was eine längerdauernde Anlage des Tastkontaktes mit gleichbleibender Anlagekraft am Planzgut erlaubt.

Die Tastorgane können selbst als mit der Pflanzenkultur zusammenwirkende Tastkontakte zur Errichtung eines steuerbaren Niederspannungs-Bodenstromkreises oder -Stromkreiszweiges durch wenigstens eine Pflanze hindurch in das Erdreich ausgebildet, zum Beispiel pendelnd aufgehängt, sein.

So läßt sich wenigstens ein Tastkontakt durch mindestens ein gedrehtes oder geflochtenes Drahtseil aufhängen oder bilden und über ein isoliertes Kabel an eine Stromquelle anschließen.

Da hier die Strompfade von den Tastkontakten über mitunter ausgedörrte dünne Pflanzenfasern wie Getreideähren führen, empfiehlt es sich, an den Tastkontakten besondere Mittel zur Verbesserung des Stromüberganges zur Einwirkung zu bringen. Die einfachste Methode ist das Befeuchten der Kontaktflächen und/oder der abzutastenden Teile der Bezugsfläche, also der Innenfläche der Pflanzenkultur.

Wo, wie im Ausführungsbeispiel, die Behandlung durch Sprühen erfolgt, gelangt ohnehin das Sprühmedium nicht nur auf die zu behandelnden Pflanzen, sondern auch auf die Kontaktflächen. Das erfordert nicht einmal besondere Vorkehrungen, da die Sprühflüssigkeit im Überfluß aufgetragen wird und dadurch vor allem die Pflanzen hinreichend durchnäßt.

### Kurze Beschreibung der Erfindung

Weitere Ausgestaltungen und Vorteile der Erfindung sind in den Unteransprüchen angegeben und sollen jetzt anhand der Zeichnung ausführlicher erläutert werden. Es zeigen:
- Fig.1: eine Vorderansicht einer erfindungsgemäßen "Feldspritze" mit Auslegerbalken und einer Einstellung der Tastebene in Höhe der Oberseite einer Pflanzenkultur,
- Fig.2: die ungleichmäßige Verteilung des Sprühmittels bei zur Hüllfläche geneigten Auslegerbalken,
- Fig.3: eine weiter ausgestaltete Vorderansicht mit schematischer Schaltungsanordnung zur unmittelbaren Steuerung nach der Auflage auf den plattenförmigen Tastkontakten beziehungsweise Sensorplatten bei der Auflage auf dem Erdreich,
- Fig.4: die schematische Relativanordnung der einzelnen Tastkontakte zueinander und zum Erdboden in sieben möglichen Betriebsstellungen mit den entsprechenden Korrekturbefehlen,
- Fig.5: eine Darstellung eines mit zwei Wippauslegern versehenen Sprühfahrzeuges an einer Hangkante bei selbsttätiger Höhensteuerung und
- Fig.6: eine abgewandelte Ausführungsform eines Tastkontaktes.

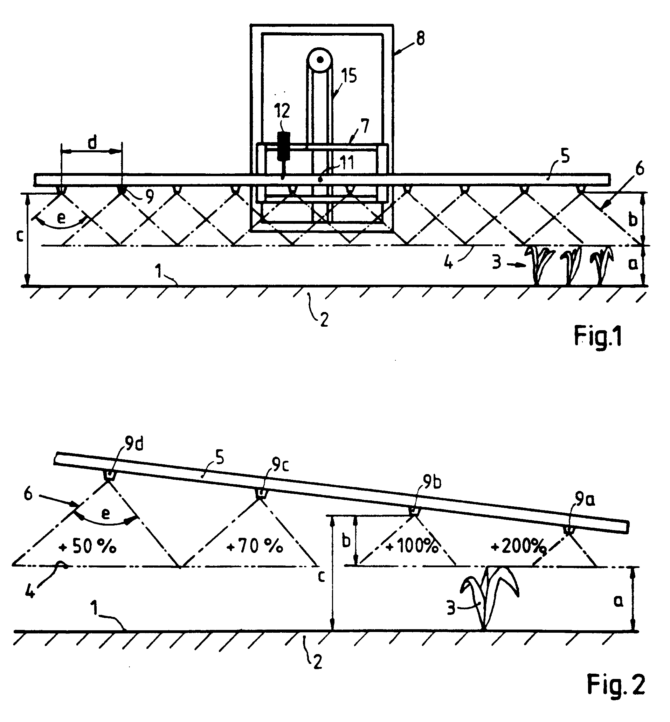

In Figur 1 ist mit (1) eine Grundfläche bezeichnet, der Erdboden beziehungsweise der Aschluß des Erdreiches (2). Zur Vereinfachung ist die Grundfläche (1) hier als völlig eben und waagerecht dargestellt. Sie trägt eine Pflanzenkultur (3), welche die Grundfläche (1) um die Höhe (a) überragt. Um diese Höhe liegt damit die die Pflanzenkultur überdeckende Bezugsfläche (4) über der Grundfläche (1). Um die Pflanzen gleichmäßig - etwa durch die hier als Sprüheinrichtung ausgebildete und mit Sprühdüsen (9) versehene Behandlungseinrichtung (6) - pflegen beziehungsweise behandeln zu können, muß daher der Auslegerbalken (5) um einen bestimmten Abstand (b) über der Bezugsfläche (4) angebracht werden und ist in der Höhe (c) über der Grundfläche (1) zu führen, wenn eine gleichmäßige Behandlung oder Pflege der Pflanzen erfolgen soll.

Um dies zu ermöglichen, ist der Auslegerbalken (5) an einem rahmenförmigen Zwischenträger (7) angebracht, der lotrecht verstellbar an einem Hauptrahmen (8) geführt ist.

Dieser Hauptrahmen muß in irgendeiner geeigneten Weise wenigstens parallel zur Grundfläche bewegbar geführt werden können. In aller Regel ist der Träger ein Traktor, kann jedoch beispielsweise ein Anhängerfahrzeug, ein anders geartetes motorisches Landfahrzeug, bei Wasserkulturen ein schwimmfähiges beziehungsweise ein Amphibienfahrzeug und im Prinzip auch ein Schwebeträger wie ein Hubschrauber, Luftkissenboot und dergleichen sein. Die hier zu behandelnde Höhensteuerung kann grundsätzlich bei der gegebenen Voraussetzung der Ebene nach der Höhe (c) über dem Erdboden, grundsätzlich aber auch nach dem Abstand (b) über der die Pflanzenkultur (3) abschließenden Bezugsfläche (4) erfolgen. Diese Höheneinstellung kann durch eine nicht dargestellte mechanische, hydraulische oder dergleichen Ausführung erfolgen.

Bei gleichmäßigen Zwischenabständen (d) zwischen den Sprühdüsen (9) und geeignetem Sprühwinkel (e) läßt sich also die ganze Pflanzenkultur weitgehend gleichmäßig mehrfach übersprühen und damit befeuchten.

Das ist wichtig zum Behandeln der Kultur gegen Unkraut, durch Herbizide, gegen Pilze durch Pestizide und gegen andere Schädlinge durch Insektizide. Es kommt aber nicht nur auf die Gleichmäßigkeit, sondern auch auf die richtigen Abstände an, da Überkonzentrationen zu gesundheitlichen Schädigungen führen können, während Unterkonzentrationen oft wirkungslos sind. Daher ist eine ständige Abtastung der Höhe (c) oder des Abstandes (b) mit unverzüglicher Nachstellung notwendig.

Zudem sind der Erdboden und die Bezugsfläche (4) nicht stets waagerecht, sie sind nicht einmal immer eben. Daher muß für einen annähernden Ausgleich gesorgt werden, wozu der Auslegerbalken (5) um eine horizontale Achse im Lager (11) am Zwischenträger (7) einstellbar gelagert ist und durch den exzentrisch zum Lager vorgesehenen Hydraulikzylinder (12) verschwenkt werden kann.

Nach Figur 2 ist die Höhe (a) unverändert, der Auslegerbalken (5) ist aber um ca. 8 Grad zur Grundfläche (1) geneigt. Bei der Sprühdüse (9b) sind die Größen (b) und (c) so verändert, daß dort mit + 100% die doppelte Sprühdichte erreicht wird gegenüber dem Musterfall nach Figur 1. Bei den weiter außenliegenden Düsen (9a) ist dagegen der Sprühabstand (b) noch kleiner; dort wird eine Sprühdichte von + 200% erreicht, bei den innenliegenden Düsen (9c) eine solche von + 70% und bei (9d) + 50%. Dies hat Bedeutung für die ständige Nachregelung der Auslegerneigung durch den Hydraulikzylinder (12).

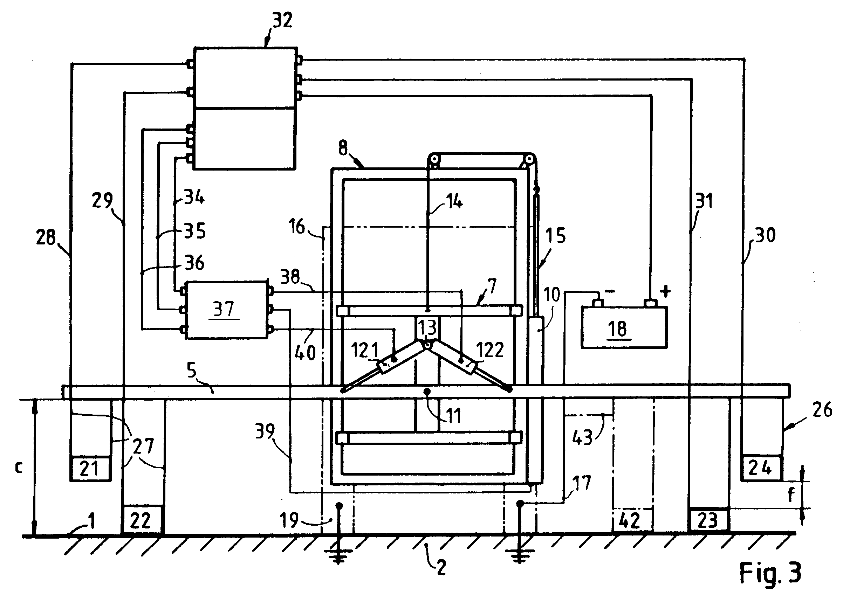

Die Ausführung der Feldspritze nach Figur 3 unterscheidet sich von derjenigen nach Figur 1 zunächst dadurch, daß oberhalb des Lagers (11) in einem gemeinsamen Gelenk (13) zwei als Hydraulikzylinder ausgebildete Wippwerke (121,122) am Zwischenträger (7) angelenkt sind, der mittels des Hubseils (14) des Hubwerkes (15) an dessen Hydraulikzylinder (10) angeschlossen ist.

Das Hubwerk (15) und die beiden Wippwerke (121,122) sollten möglichst mit doppeltwirkenden Zylindern versehen sein. Auf diese Weise könnte das Lager (11) entfallen oder wenigstens durch eine Langloch-Verbindung als Kippsicherung ersetzt werden.

Zu den beiden Enden des Auslegerbalkens (5) hin sind dicht nebeneinander jeweils zwei Tastvorrichtungen (26) mit Tastkontakten (21-24) angeordnet. Diese Tastkontakte sind hier als rechteckförmige Metallplatten ausgebildet und am Auslegerbalken (5) durch isolierte Drahtseile (27) aufgehängt. Sie sind zudem über Leitungen (28-31) an eine Steuereinheit (32) angeschlossen, die ihrerseits durch die Leitung (33) mit dem Pluspol der Batterie (18) verbunden ist. Die elektrische Steuereinheit (32) ist zudem über Steuerleitungen (34-36) an ein Hydraulikaggregat (37) angeschlossen, von dem Hydraulikleitungen (38-40) zu den beiden Wippwerken (121,122) und dem Hubwerk (15) führen.

Ein weiterer Tastkontakt (42) ist rechts unten mit Strichpunktlinien dargestellt und als Erdungselektrode eingesetzt, deren Aufhänge-Drahtseil (27) über eine Leitung (43) an die Leitung (17) und damit an den Minuspol der Batterie (18) angeschlossen ist. Auf diese Weise wird nicht nur die Erdung des Traktors und dessen dort angeschlossener Teile seitlich zu dem Stromweg über die Reifen (19) verbessert, sondern es wird auch den von den positiv angeladenen Tastkontakten (23, 24) ausgehenden Erdstrom mittelbar ein zum negativen Pol der Batterie führende Rückstromweg dicht zugeordnet. Dadurch wird der Rückführanteil der in den Boden einzuleitenden elektrischen Energie vergrößert.

Anstelle ebener Platten können als Tastkontakte auch beliebige andere Körper verwendet werden, etwa querliegende Stäbe, Rohre, kugelförmige oder andere Gebilde, sie können starr oder wenigstens begrenzt verformbar sein. Wichtig ist aber, daß ihre Außenfläche zum Durchleiten des elektrischen Stromes geeignet ist. Gegebenenfalls kann die Oberflächenschicht entsprechend gestaltet sein und insbesondere Edelmetall oder wenigstens spitze Elektrodenvorsprünge von besonderem Kontaktmaterial aufweisen.

Die wesentliche Funktion der Tastkontakte (21-24,42) besteht darin, bei Berührung mit dem Erdboden Kontakt zu geben und damit einen vom Pluspol der Batterie ausgehenden Stromweg in das Erdreich (2) beziehungsweise die Erdmasse weiterzuführen und diesen Stromkreiszweig beim Abheben wieder zu öffnen. Es wird also nach der Höhe (c) gesteuert.

Unter der Voraussetzung, daß der waagrechte Auslegerbalken (5) lotrecht gehoben und gesenkt wird, werden jeweils die von den inneren (22,23) und von den äußeren (21,24) Tastkontakten ausgehenden Stromkreise gleichzeitig geschlossen und geöffnet. Die Stromkreise werden dabei in der Steuereinheit (32) ständig abgefragt. Sobald einer dieser Stromkreise einen Stromfluß im Sinne einer Überschreitung von Toleranzgrenzen erkennen läßt, wird dem durch entsprechende Steuerung der Hydraulikeinheit entgegengewirkt.

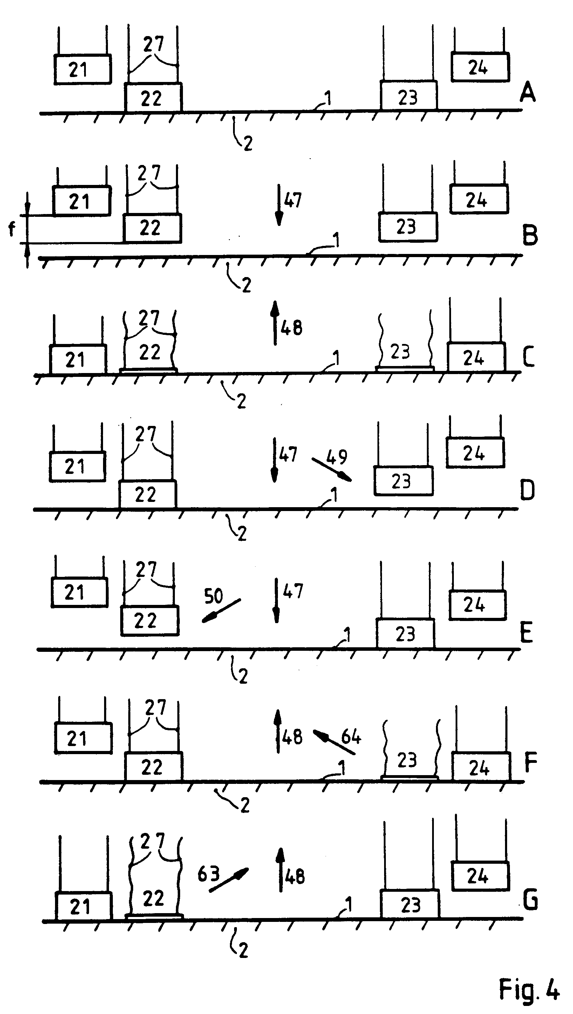

In Figur 4 sind alle möglichen Kontaktkombinationen von A bis G übereinander aufgeführt. Dabei zeigt Bild A den normalen Zustand, wie er auch aus Figur 3 zu entnehmen ist, das heißt, die Tastkontakte (22,23) stehen unbelastet noch auf der Grundfläche. Der dabei möglicherweise fließende Strom ist aber so gering, daß er von dem angesetzten Sensor nicht wahrgenommen wird oder daß er eine Reaktion erfordert. Der Zustand bleibt also zunächst unverändert.

Nach Betriebsstellung B ist der Auslegerbalken (5) so weit angehoben, daß alle Tastkontakte (21-24) Abstand von der Grundfläche (1) erlangt haben und daher gemäß Pfeil (47) mittels des Hubwerkes (15) etwa parallel abgesenkt werden.

In der Betriebsstellung D liegt ausschließlich der Tastkontakt (22) auf der Grundfläche (1) auf. Das linke Ende des Auslegerbalkens (5) ist daher in Figur 3 tiefer als das rechte Ende. Um diese Schräglage auszugleichen, muß einmal gemäß Pfeil (49) durch das Wippwerk (122) der Auslegerbalken (5) im Uhrzeigersinn gemäß Figur 3 verschwenkt werden, was offensichtlich auch zum Abheben des Tastkontaktes (22) führen würde. Daher ist gleichzeitig gemäß Pfeil (47) abzusenken.

Dies gilt auch für die umgekehrte Anordnung nach E, wo nach Pfeil (50) das Wippwerk (121) den Auslegerbalken (5) entgegen dem Uhrzeigersinn verschwenkt.

Stellung F erfordert einmal ein Verschwenken entgegen dem Uhrzeigersinn durch Betätigen des Wippwerkes (122) und zusätzlich das Anheben gemäß Pfeil (47).

Bei der Stellung G kommt zum Anheben gemäß Pfeil (47) das Verschwenken im Uhrzeigersinn durch das Wippwerk (121) gemäß Pfeil (63).

Es gibt also eine Höhendifferenz (f) zwischen den beiden einander zugeordneten Tastkontakten wie (21,22). Geschaltet wird nur, wenn dieser Toleranzbereich verlassen wird. Sofern er zu groß bemessen ist, kann mit drei oder mehr, einander enger zugeordneten Tastkontakten gearbeitet werden.

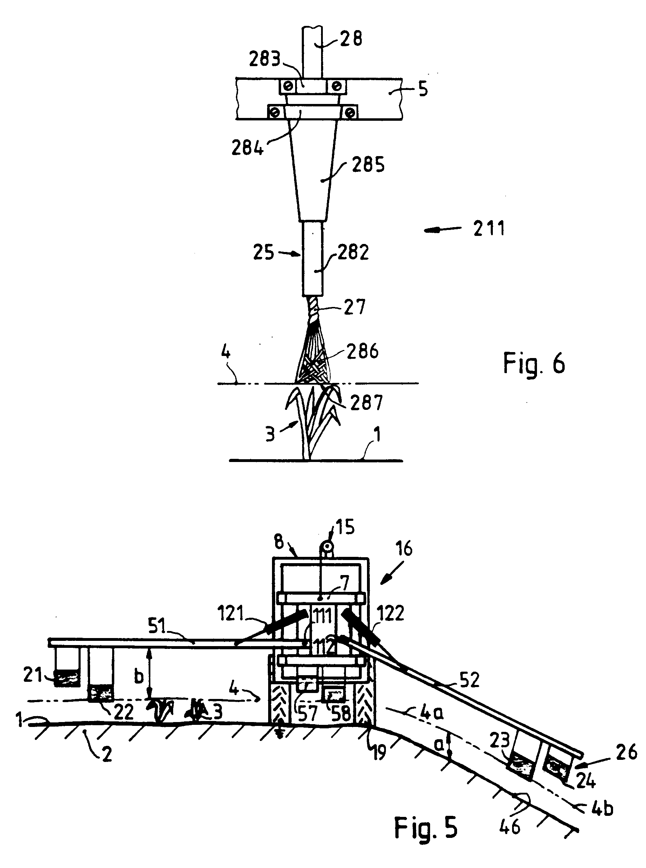

Nach Figur 6 sind am Zwischenträger (7) in den Lagern (111, 112) zwei einarmige Wippausleger (51,52) gelagert. Dabei soll der Abstand (b) unter dem Wippausleger beziehungsweise zur Bezugsfläche (4) abgetastet werden, der Oberseite der Pflanzenkultur (3). Dies ist mit flächigen Kontaktelektroden ohne weiteres insbesondere dann möglich, wenn vorher Flüssigkeit auf die Pflanzenkultur gesprüht worden ist oder durch eine besondere Sprüheinrichtung (6) auf diese Kultur und die Tastelektroden aufgebracht wurde.

Auf diese Weise können die Sensor-Stromkreise auch durch dünnes und verhältnismäßig trockenes und wenig leitfähiges Material bis in den Erdboden an Masseschluß durchgeführt werden. Damit erübrigen sich Kalkulationen über die Kompensation der Pflanzenhöhe (a) und das Eindringen der Traktorreifen in den sonst abzutastenden Erdboden. Zudem ist die Kontaktsicherheit vor allem dann sehr hoch, wenn mit großflächigen Tastkontakten gearbeitet wird. Daher ändert sich dort steuerungsmäßig gegenüber der Ausführung Figur 3 nur wenig, soweit es eine ebene Fläche am linken Ausleger (51) betrifft.

Der rechte Ausleger (52) ragt dagegen über den geneigten Hang (46) hinaus. Die Bezugsfläche (4) hat dort zunächst eine Krümmung (4a), ferner einen weiteren nur angenähert ebenen Abschnitt (4b). Die Pflanzenhöhe (a) bleibt aber an allen Stellen erhalten, so daß auch bei derart widrigen Umständen eine gleichmäßige Sprühintensität erzielt werden kann.

Bei der Ausführung mit zwei Wippauslegern nach Figur 5 können auch im Bereich Auslegerlager (111,112) gesonderte Tastkontakte (65,66) vorgesehen sein, die in die Steuerung, insbesondere in die Hubwerks- und Wippwerksteuerung einbezogen werden.

Auf diese Weise wird eine Vergleichmäßigung auch im Bereich von Bodenwellen erzielt. Eine weitere Verbesserung erhält man dadurch, daß längs der Ausleger weitere Tastkontakte beziehungsweise Kontaktgruppen vorgesehen sind, wobei sich aus der Gesamtzahl der Tastkontakte eine begrenzte Anzahl für besondere Behandlungsvorgänge auswählen läßt. Bei Feldspritzen sind aber auch die jeweils vorgesehenen Sprühdüsen an- und abschaltbar. Diese Schaltungen können mit weiteren recht unterschiedlichen Steuervorgängen verknüpft sein.

Die in Figur 6 gezeigte und mit (211) bezeichnete abgewandelte Ausführungsform des Tastkontaktes (21) wird durch das freie Ende eines elektrischen Kabels (25) gebildet, das durch ein spiralenförmig gewickeltes Drahtseil beziehungsweise eine Litze (27) aus elektrisch hochleitendem Werkstoff wie Kupfer oder dergleichen und eine dieses umgebende Isolierhülle (282) gebildet wird.

Dieses Kabel ist durch einen ersten Klemmbügel (283) unmittelbar am Auslegerbalken (5) angeschraubt und unterhalb dieses Klemmbügels (283) von einer hohlen Kegelstumpfbuchse (285) aus Massivgummi beziehungsweise einem anderen steifelastischem Werkstoff umgeben, die zu ihrem oberen Ende hin durch einen zweiten Klemmbügel (284) am Auslegerbalken (5) festgespannt ist und dadurch eine ausgesteifte Einspannung des Kabels an diesem Auslegerbalken ermöglicht.

Dicht beziehungsweise unmittelbar unterhalb der Kegelstumpfbuchse (285) ist die Isolierhülle (282) abgelöst und das freie Ende des Drahtseiles (27) entgegen der Wicklungsrichtung aufgedreht zur Bildung eines Drahtpinsels (286), dessen breite Endfläche (287) etwa auf die Bezugsfläche (4) eingestellt wird, die hier durch die Oberseite der Pflanzenkultur (3) gebildet ist.

Auf diese weise wird zwar der Drahtpinsel (286) hinreichend nachgiebig, aber doch zur Verbesserung der Kontaktkräfte verhältnismäßig steif und dadurch die Endfläche (287) nahezu exakt auf der vorgegebenen Höhe gehalten. Im übrigen ist der Aufwand für diesen Tastkontakt außerordentlich gering.

## Patentansprüche

1. Vorrichtung zum Behandeln von Pflanzenkulturen, mit wenigstens einem unter Abstand vom Erdboden (1,2) lotrecht über der Pflanzenkultur (3) bewegbar angeordneten Einrichtungsträger (16,7), der wenigstens eine Behandlungseinrichtung (6) mit einem oder mehreren Behandlungsorganen (9a-9d) waagerecht und lotrecht bewegbar hält, die mit vorgegebenem Abstand über die Pflanzenkulturen (3) hinweggeführt werden, mit einer Mehrzahl Tastvorrichtungen (26) zum selbständigen Ertasten des Abstandes der Behandlungseinrichtung (6), der Behandlungsorgane (9) oder deren Träger (16,7) von der oberen Hüllfläche (4) der zu behandelnden Pflanzenkultur (3), mit einer durch die Tastvorrichtungen (26) beeinflußbaren Steuereinrichtung (32) und wenigstens einer durch die Steuereinrichtung (32) steuerbaren Stellvorrichtung (121,122) zur selbsttätigen Höheneinstellung der Behandlungseinrichtung (6) bzw. deren Träger oder Zwischenträger (5,51,52,7), dadurch gekennzeichnet, daß die Tastvorrichtungen (26) wenigstens zwei Tastkontakte (21-24) aufweisen, die für den elektrischen Kontakt mit der Pflanzenkultur ausgebildet sind, daß zur Ermittlung von Zwischen- oder Grenztastwerten innerhalb eines gemeinsamen Tastbereiches die wenigstens zwei Tastkontakte (21-24) in Richtung des Tastwertgefälles zueinander versetzt angeordnet sind, und daß die Tastkontakte durch ein Drahtseil (27) aufgehängt und über ein isoliertes Kabel (25) an den Pluspol einer Stromquelle (18) angeschlossen sind.

2. Vorrichtung nach Anspruch 1, dadurch gekennzeichnet, daß quer zur Bewegungsrichtung des Einrichtungsträgers (16,7) über dem Erdboden (1) in einer oder mehreren Reihen Tasteinrichtungen (26) angeordnet und in beliebiger bzw. der Arbeits- oder Tastbreite angepaßter Anzahl mit einzelnen Tastkontakten und/oder Gruppen von Tastkontakten (21-24) zum Leiten von Niederspannungsstrom durch die Pflanzen im Erdreich versehen sind.

3. Vorrichtung nach einem der Ansprüche 1 oder 2, dadurch gekennzeichnet, daß die Tastkontakte für den unmittelbaren elektrischen Kontakt mit der Pflanzkultur durch große Kontaktflächen aus elektrisch leitendem Metall gebildet sind.

4. Vorrichtung nach einem der vorhergehenden Ansprüche, dadurch gekennzeichnet, daß wenigstens ein Tastkontakt (21-24) durch mindestens ein gedrehtes oder geflochtenes Drahtseil (27) aufgehängt oder gebildet und über ein isoliertes Kabel (28-31) an eine Stromquelle (18) angeschlossen ist.

5. Vorrichtung nach Anspruch 4, dadurch gekennzeichnet, daß das metallische Drahtseil (27) des Tastkontaktes (21-24) wenigstens zu einem Ende hin für verstärkte Rückstellkräfte gegen eine seitliche Auslenkung eingerichtet ist.

6. Vorrichtung nach Anspruch 5, gekennzeichnet durch die Ausbildung des Drahtseiles (27) als mit einer dicken Gummischicht umhülltes isoliertes Kabel (28-31).

7. Vorrichtung nach wenigstens einem der Ansprüche 1 bis 6, dadurch gekennzeichnet, daß eine Mehrzahl Sensorkreise mit Tastkontakten (21-24) versehen und an eine gemeinsame Steuereinheit (32) angeschlossen sind, von welcher Steuerleitungen (34-36) zur Übermittlung entsprechender Befehlskombinationen zu den einzelnen zusammenwirkenden Stellorganen (10, 121,122) bzw deren Schalt- oder Steuerelementen geführt sind.

8. Vorrichtung nach einem der Ansprüche 1 bis 7, gekennzeichnet durch wahlweise zur Einwirkung zu bringende Mittel zur Verbesserung des Stromüberganges am Tastkontakt (21-24).

9. Vorrichtung nach Anspruch 8 mit Einrichtungen (6,9) zum Befeuchten der Elektrodenoberfläche und/oder der abzutastenden Teile der Aussenfläche einer Pflanzenkultur (3).

## Claims

1. An implement for the treatment of plant crops comprising at least one device carrier (16 and 7) arranged in a movable manner at a distance from the ground (1 and 2) vertically over the crop (3) and which holds at least one treatment device (6) with one or more treatment means (9a - 9d) in a horizontally and vertically movable manner, which are moved at a predetermined distance over the plant crops (3), a plurality of sensing devices (26) for the automatic sensing of the distance of the treatment device (6), the treatment means (9) or the carriers thereof (16 and 7) from the upper outline (4) of the plant crop (3) to be treated, a control device (32) responsive to the sensing devices (26) and at least one setting device (121 and 122), able to be controlled by the control device (32), for the automatic resetting of the level of the treatment device (6) or, respectively, the carriers or intermediate carriers (5, 51, 52 and 7) thereof, characterized in that the sensing devices (26) possess at least two sensing contacts (21 through 24), which are designed for electrical contact with the plant crop, in that for the determination of intermediate or limit values within a common sensing range the at least two sensing contacts (21 through 24) are arranged with an offset to each other in the direction of the sensed value slope and in that the sensing contacts are suspended by means of a wire (27) and are connected via an insulated cable (25) with the plus pole of an electrical supply (18).

2. The implement as claimed in claim 1, characterized in that sensing devices (26) are arranged transversely in relation to the direction of movement of the device carrier (16 and 7) over the ground (1) and are in one or more rows in a convenient number or in a number adapted to the width or the sensed width are furnished with individual sensing contacts and/or groups of sensing contacts (21 through 24) for the conduction of a low voltage current through the plants in the ground.

3. The implement as claimed in claim 1 or in claim 2, characterized in that the sensing contacts are designed in the form of large contact surfaces of an electrically conducting metal for the direct electrical contact with the plant crop through substantial contact areas.

4. The implement as claimed in any one of the preceding claims, characterized in that at least one sensing contact (21 through 24) is suspended or constituted by at least one twilled or braided wire cable (27) and is connected via an insulated cable (28 through 31) with a source of electrical power (18).

5. The implement as claimed in claim 4, characterized in that the metallic wire cable (27) of the sensing contact (21 and 24) is designed, at least towards one end, for enhanced return forces against a lateral deflection.

6. The implement as claimed in claim 5, characterized by the design of the wire (27) as an insulated cable (28 through 31) encased in a thick rubber layer.

7. The implement as claimed in at least one of the claims 1 through 6, characterized in that a plurality of sensor circuits is provided having sensing contacts (21 and 24) and connected with a common control unit (32), from which there extend control lines (34 through 36) for the transmission of corresponding combinations of instructions to the individual cooperating setting members (10, 121 and 122) or, respectively, to the switching or control elements thereof.

8. The implement as claimed in any one of the claims 1 through 7, characterized by means to be selectively caused to operate in order to improve the transition of current at the sensing contact (21 through 24).

9. The implement as claimed in claim 8 comprising means (6 and 9) for moistening the electrode surface and/or the parts to be sensed of the outer surface of a plant crop (3).

## Revendications

1. Dispositif de traitement de cultures de plantes, comportant au moins un support (16, 7) disposé à distance du sol (1, 2) et mobile verticalement au-dessus de la culture (3), qui porte de manière mobile horizontalement et verticalement au moins un appareil de traitement (6) pourvu d'un ou plusieurs organes de traitement (9a-9d) qui passent à une distance prédéterminée au-dessus des cultures (3), avec une pluralité de dispositifs palpeurs (26) pour détecter la distance entre l'appareil de traitement (6), les organes de traitement (9) ou leurs supports (16, 7) et la surface d'enveloppe (4) de la culture à traiter (3), avec un appareil de commande (32) influencé par les dispositifs palpeurs (26) et avec au moins un dispositif de réglage (121, 122) commandé par l'appareil de commande (32) pour régler automatiquement le niveau de l'appareil de traitement (6) ou de ses supports ou supports intermédiaires (5, 51, 52, 7), caractérisé en ce que les dispositifs palpeurs (26) comportent au moins deux contacts palpeurs (21-24) agencés pour le contact électrique avec la culture, en ce que, pour mesurer des valeurs intermédiaires ou limites de palpation à l'intérieur d'un domaine de palpation commun, lesdits au moins deux contacts palpeurs (21-24) sont décalés mutuellement dans la direction de variation de la grandeur palpée, et en ce que les contacts palpeurs sont suspendus par un câble en fils métalliques (27) et sont raccordés au pôle positif d'une source de courant (18) au moyen d'un câble isolé (25).

2. Dispositif selon la revendication 1, caractérisé en ce que des dispositifs palpeurs (26) sont disposés au-dessus du sol (1) en une ou plusieurs rangées perpendiculaires à la direction de déplacement du support (16, 7) et comportent un nombre, qui est quelconque ou adapté à la largeur de travail ou de palpation, de contacts palpeurs individuels et/ou de groupes de contacts (21-24) pour conduire un courant à basse tension à travers les plantes jusqu'à la terre.

3. Dispositif selon la revendication 1 ou 2, caractérisé en ce que les contacts palpeurs sont agencés pour assurer le contact électrique direct avec la culture au moyen de grandes surfaces de contact en métal électriquement conducteur.

4. Dispositif selon l'une des revendications précédentes, caractérisé en ce qu'au moins un contact palpeur (21-24) est suspendu ou formé par au moins un câble (27) de fils métalliques tordus ou tressés et est raccordé à une source de courant (18) au moyen d'un câble isolé (28-31).

5. Dispositif selon la revendication 4 caractérisé en ce que le câble de fils métalliques (27) du contact palpeur (21-24) est agencé, au moins à une extrémité, pour assurer des forces de rappel accrues contre une déviation latérale.

6. Dispositif selon la revendication 5, caractérisé par l'agencement du câble de fils métalliques (27) sous la forme d'un câble isolé (28-31) entouré d'une épaisse couche de caoutchouc.

7. Dispositif selon au moins l'une des revendications 1 à 6, caractérisé en ce que plusieurs circuits capteurs sont pourvus de contacts palpeurs (21-24) et sont raccordés à un appareil de commande commun (32) d'où partent des lignes de commande (34-36) pour transmettre des combinaisons appropriées d'ordres aux divers dispositifs de réglage associés (10, 121, 122) et/ou à leurs éléments de commutation ou de commande.

8. Dispositif selon l'une des revendications 1 à 7, caractérisé par des moyens susceptibles d'être mis en action sélectivement pour améliorer le passage du courant sur le contact palpeur (21-24).

9. Dispositif selon la revendication 8, comportant des organes (6, 9) pour humecter la surface servant d' électrode et/ou les parties à palper de la surface extérieure d'une culture de plantes (3).
